# EUROPÄISCHE PATENTSCHRIFT

(11) **EP 2 164 732 B1**
(45) Veröffentlichungstag und Bekanntmachung des Hinweises auf die Patenterteilung: **31.08.2011**
(21) Anmeldenummer: 08759743.1
(22) Anmeldetag: 19.05.2008
(51) Int. Cl.: B60T 13/14, B60T 13/128, B60T 8/44

(54) **HYDRAULISCHE FAHRZEUGBREMSANLAGE SOWIE VERFAHREN ZUM BETRIEB DER HYDRAULISCHEN FAHRZEUGBREMSANLAGE**
HYDRAULIC VEHICLE BRAKE SYSTEM AND METHOD FOR OPERATING SAID HYDRAULIC VEHICLE BRAKE SYSTEM
SYSTEME DE FREINAGE HYDRAULIQUE DE VEHICULE ET PROCEDE DE FONCTIONNEMENT DE CE SYSTEME

(30) Priorität: 14.07.2007 DE 102007032948; 25.04.2008 DE 102008020856
(43) Veröffentlichungstag der Anmeldung: 24.03.2010
(73) Patentinhaber: Continental Teves AG & Co. OHG, 60488 Frankfurt (DE)
(72) Erfinder: BENDER, Ralf, 65719 Hofheim (DE); BEER, Wilhelm, 65428 Rüsselsheim (DE); SCHLITT, Patrick, 36110 Schlitz (DE); MOESSINGER, Jan, 60486 Frankfurt/M. (DE)
(86) Internationale Anmeldenummer: PCT/EP2008/056118
(87) Internationale Veröffentlichungsnummer: WO 2009/010323

(56) Entgegenhaltungen:
- DE-A1- 3 440 972
- DE-A1- 4 012 958
- US-A- 3 787 029

## Beschreibung

Die Erfindung betrifft eine hydraulische Fahrzeugbremsanlage, die einen von einer Bremsbetätigungseinrichtung betätigbaren Bremsdruckgeber aufweist, wobei der Bremsdruckgeber über eine hydraulische Leitung mit Radbremsen des Fahrzeugs verbindbar ist und im wesentlichen aus einem Hauptbremszylinder und einem vorgeschalteten hydraulischen Verstärker besteht, der eine Rücklaufkammer und eine Verstärkungskammer, einen darin angeordneten Arbeitskolben sowie einen Steuerkolben aufweist, wobei der Arbeitskolben der in Kraftabgaberichtung über ein Betätigungselement mit einem Hauptbremszylinderkolben wirkverbunden ist und der Verstärker zwecks Bremskraftverstärkung über einen Eingang mit einem hydraulischen Druck einer hydraulischen Druckquelle beaufschlagbar ist, wobei ein Abgang des Verstärkers mit einem Vorratsbehälter verbindbar ist.

Eine derartige hydraulische Fahrzeugbremsanlage ist beispielsweise aus dem Dokument US-3,787,029 oder aus em Bremsenhandbuch, 6. Auflage, Bartsch Verlag bekannt. Der hydraulische Verstärker des daraus bekannten Bremsdruckgebers wird mittels eines Speichers mit einer Speicherladevorrichtung mit Druck beaufschlagt, wobei die Speicherladevorrichtung von einer Lenkungspumpe gespeist wird. Als nachteilig bei der bekannten Fahrzeugbremsanlage wird angesehen, dass der hydraulische Verstärker dem Fahrer

des Fahrzeuges kein gutes Feedback an sein Bremspedal gibt.

Daher ist es Aufgabe der Erfindung, eine dahingehend verbesserte Fahrzeugbremsanlage bereitzustellen, deren hydraulischer Verstärker dem Fahrer ein gewünschtes Feedback ermöglicht und welcher zudem leicht und kompakt ausgebildet ist. Ferner ist es wünschenswert, dass hohe Verstärkungsfaktoren realisierbar sind.

Diese Aufgabe wird erfindungsgemäß dadurch gelöst, dass der Steuerkolben einen daran angeordneten, tellerförmigen Betätigungskolben aufweist, welcher mit dem Arbeitskolben zusammenwirkt, und der Steuerkolben im Arbeitskolben derart geführt vorgesehen ist, dass bei einer Betätigung des Verstärkers eine zweistufige Drosselung des Volumenstromes zwischen der Verstärkungskammer und der Rücklaufkammer zum Druckaufbau in der Verstärkungskammer ermöglicht ist. Dadurch kann eine so genannte Springer-Funktion realisiert werden. Zusätzlich wirkt sich der in der Verstärkungskammer aufbauende Druck auf die Betätigungsseite als ein Feedback für den Fahrer aus, wobei die Flächen durch die Mehrteiligkeit der Kolbeneinheit variabel an Kundenwünsche anpassbar sind. Somit können Springer und Feedback auf die gewünschten Anforderungen eingestellt werden.

Eine vorteilhafte Ausführungsform der Erfindung sieht vor, dass der Betätigungskolben mittels eines Federelementes in Kraftabgaberichtung an einem Anschlag vorgespannt vorgesehen ist, wobei das Federelement an einem weiteren Anschlag anliegt. Die Anschläge erlauben eine Baugruppenbildung und sichern zusätzlich im Betrieb den Steuerkolben im Gehäuse des Verstärkers.

Vorzugsweise sind dabei die Anschläge als einfach ausgestaltete und leicht zu montierende Sicherungsringe vorgesehen, welche auf dem Steuerkolben befestigt sind.

Eine kompakte Bauform des Verstärkers wird vorzugsweise dadurch erreicht, dass der Arbeitskolben zur Führung in dem Steuerkolben einen zylindrischen Führungsabschnitt aufweist, welcher an einer Innenseite eines topfförmigen Endes des Steuerkolbens geführt ist, wobei der Führungsabschnitt einen oder mehrere Durchbrüche aufweist, die eine erste Drosselung des Volumenstroms ermöglichen, und an einer Stirnseite des Steuerkolbens eine Dichtkante vorgesehen ist, welche an eine Dichtfläche des Arbeitskolbens anlegbar ist.

Die Dichtfläche des Arbeitskolbens ist einfach herstellbar, indem die Dichtfläche in einer umlaufenden Ringnut des Arbeitskolbens ausgebildet ist.

Gemäß einer vorteilhaften Ausbildung der Erfindung sind die Durchbrüche als Schlitze vorgesehen. Hierdurch sind diese leicht in den Steuerkolben einzubringen.

Eine besonders kompakte Bauweise kann gemäß einer bevorzugten Ausführungsform der Erfindung dadurch erreicht werden, dass der Arbeitskolben tellerförmig ausgebildet ist und eine Dichtkante aufweist, an welche der Betätigungskolben mit einer umlaufenden Außenfläche anlegbar ist.

Das benötigte Hydraulikvolumen lässt sich dadurch minimieren, dass eine Stirnseite des Verstärkers kegelförmig ausgebildet ist. Die Stirnseite kann so an die Tellerform des Betätigungskolbens angepasst werden.

Um die Bauteilanzahl zu reduzieren und die Montage zur vereinfachen, können der Arbeitskolben und das Betätigungselement einteilig vorgesehen sein.

Gemäß einer vorteilhaften Ausführungsform kann eine mechanische Rückfallebenen dadurch vorgesehen sein, dass zwischen dem Arbeitskolben und dem Steuerkolben ein Rückschlagventil vorgesehen ist, welches ein Druckausgleich zwischen der Rücklaufkammer und der Verstärkungskammer bei Ausfall der hydraulischen Druckquelle ermöglicht.

Bei schweren Fahrzeugen, bei denen die Fußkraft als Rückfallebene nicht ausreicht, kann der hydraulische Verstärker gemäß einer vorteilhaften Ausführungsform der Erfindung zusätzlich zu einer mechanischen Rückfallebene eine elektrische Rückfallebene aufweisen.

Vorzugsweise weist der Verstärker im Eingang ein Rückschlagventil und im Abgang ein Flusskontrollschalter auf und eine elektrisch angetriebene Pumpe ist an dem Verstärker angeordnet, wobei die Pumpe bei Ausfall der Druckquelle Volumen von der Rücklaufkammer in die Verstärkungskammer fördert.

Ein erfindungsgemäßes Verfahren zum Betrieb der erfindungsgemäßen hydraulischen Fahrzeugbremsanlage sieht vor, dass der Druckaufbau in der Verstärkungskammer über eine zweistufige Drosselung des Volumenstromes erfolgt.

Weitere Merkmale und Vorteile der Erfindung gehen aus der nachfolgenden Beschreibung von zwei Ausführungsbeispielen anhand der Zeichnung hervor. Es zeigt jeweils stark schematisiert sowie im Schnitt:
- Figur 1: ein hydraulisches Schaltschema einer ersten Ausführungsform einer erfindungsgemäßen Fahrzeugbremsanlage mit einem Bremsdruckgeber;
- Figur 2: den Bremsdruckgeber gemäß Fig. 1 teilweise im Längsschnitt;
- Figur 3a, 3b: den hydraulischen Verstärker des Bremsdruckgebers gemäß Fig. 2 in vergrößerter Darstellung in unbetätigtem Zustand;
- Figur 4: den hydraulischen Verstärker des Bremsdruckgebers gemäß Fig. 2 in vergrößerter Darstellung bei Betätigungsbeginn;
- Figur 5: den hydraulischen Verstärker des Bremsdruckgebers gemäß Fig. 2 in vergrößerter Darstellung bei Betätigung;
- Figur 6: ein Kraft-Weg-Diagramm des hydraulischen Verstärkers gemäß Fig. 2;
- Figur 7: ein Kraft-Kraft-Diagramm des hydraulischen Verstärkers gemäß Fig. 2;

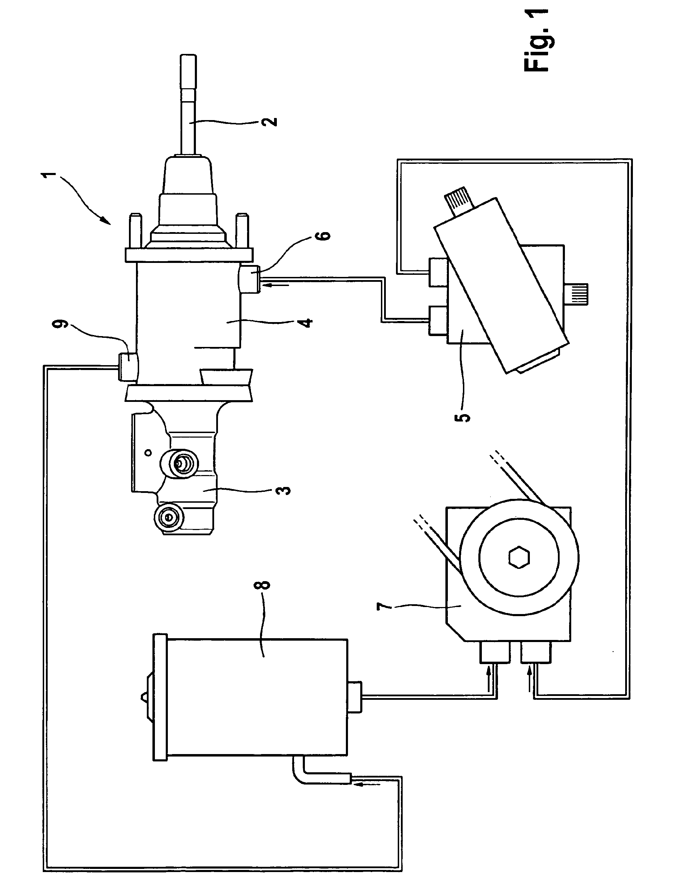

Fig. 1 zeigt ein hydraulisches Schaltschema einer hydraulischen Fahrzeugbremsanlage mit einem Bremsdruckgeber 1. Der Bremsdruckgeber 1, welcher über wenigstens eine hydraulische Leitung mit Radbremsen des Fahrzeuges verbindbar ist, ist mittels einer Bremsbetätigungseinrichtung umfassend eine Kolbenstange 2 mit einem daran befestigten, nicht gezeigten Bremspedal betätigbar.

Wie ersichtlich ist, ist der Bremsdruckgeber 1 in einen hydraulischen Kreis einer Servolenkung in Reihe zwischen einem Lenkgetriebe 5 und einem Vorratsbehälter 8 geschaltet. Der Bremsdruckgeber 1 besteht im Wesentlichen aus einem Hauptbremszylinder 3, der auch als Tandem-Hauptbremszylinder ausgebildet sein kann, und einem vorgeschalteten hydraulischen Verstärker 4.

Ein Eingang 6 des hydraulischen Verstärkers 4 ist mit dem Lenkgetriebe 5 verbunden, wobei der Verstärker 4 zwecks Bremskraftverstärkung über das Lenkgetriebe 5 und den Eingang 6 mit einem hydraulischen Druck einer Lenkungspumpe 7 als hydraulischen Druckquelle beaufschlagbar ist. Gespeist wird die Lenkungspumpe 7 von dem Vorratsbehälter 8, mit welchem ein Abgang 9 des hydraulischen Verstärkers 4 verbunden ist.

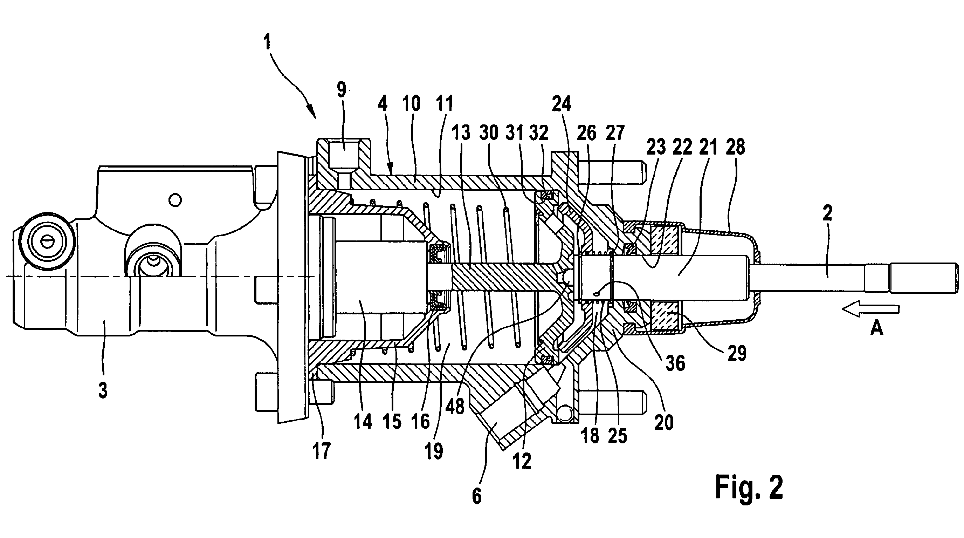

Aus Fig. 2, welche den Bremsdruckgeber 1 teilweise im Längsschnitt zeigt, ist der konstruktive Aufbau des hydraulischen Verstärkers 4 und seine besonders kompakte Bauform ersichtlich.

Der hydraulische Verstärker 4 weist ein Gehäuse 10 mit einer Längsbohrung 11 auf, in welcher ein tellerförmiger Arbeitskolben 12 axial verschiebbar und radial geführt vorgesehen ist. In Kraftabgaberichtung, welche gemäß einem Pfeil A dargestellt ist und welche gleichfalls die Betätigungsrichtung des Verstärkers 4 zeigt, ist der Arbeitskolben 12 über ein Betätigungselement 13 mit einem Hauptbremszylinderkolben 14 wirkverbunden. Der Hauptbremszylinder 3 ist nicht im Detail dargestellt, da sein Aufbau und seine Funktion allgemein bekannt sind. Er kann ein- bzw. zweikreisig ausgebidet sein.

Wie aus Fig. 2 hervorgeht, ist das Betätigungselement 13 einteilig mit dem Arbeitskolben 12 ausgebildet, wodurch die Anzahl der Bauteile des Verstärkers 4 reduziert und die Montage vereinfacht werden kann. Ebenso ist es jedoch denkbar, das Betätigungselement 13 als separates Bauteil vorzusehen, welches mit dem Arbeitskolben 12 verbunden wird.

Die hydraulischen Kreise des Verstärkers 4 und des Hauptbremszylinders 3 sind durch eine Glocke 15 flüssigkeitsdicht von einander getrennt, wobei im Boden der Glocke 15 ein Medientrennelement 16 angeordnet ist, mittels welcher das Betätigungselement 13 abgedichtet geführt werden kann. Ein Rand 17 der Glocke 15 ist zwischen dem Gehäuse 10 des Verstärkers 4 und dem Hauptbremszylinder 3 angeordnet, die miteinander verschraubt sind. Ein nicht dargestelltes Dichtelement gewährleistet eine flüssigkeitsdichte Verschraubung.

Der Arbeitskolben 12 unterteilt das Gehäuse 10 in eine Verstärkungskammer 18 und eine Rücklaufkammer 19, wobei die Verstärkungskammer 18 zwischen dem Arbeitskolben 12 und einer kegelförmigen Stirnseite 20 des Verstärkers 4 vorgesehen ist und die Rücklaufkammer 19 von dem Arbeitskolben 12, dem Gehäuse 10 sowie der Glocke 15 begrenzt ist.

Ein Steuerkolben 21 erstreckt sich durch eine axiale Öffnung 22 der Stirnseite 20 und ist mit der Kolbenstange 2 des nicht dargestellten Bremspedals verbunden. Die Abdichtung der Öffnung 22 erfolgt mittels einer in das Gehäuse 10 eingebrachte Dichtmanschette 23. Um Eindringen von Schmutz in den Verstärker 4 zu vermeiden, ist zudem eine Schutzkappe 28 an der Stirnseite 20 befestigt, in welcher ein den Steuerkolben 21 umgebenden Filzring 29 angeordnet ist.

Auf dem Steuerkolben 21 ist ein tellerförmiger Betätigungskolben 24 axial geführt angeordnet, wobei der Betätigungskolben 24 mittels eines Federelementes 25 in Betätigungsrichtung A an einem Anschlag vorgespannt vorgesehen ist. Der Anschlag wird durch einen auf dem Steuerkolben 21 befestigten Sicherungsring 26 gebildet. Ein weiterer Sicherungsring 27 bildet einen Anschlag für das Federelement 25 und sichert gleichzeitig den Steuerkolben 21 im Gehäuse 10 des Verstärkers 4.

Wie Fig. 2 weiter entnehmbar ist, ist der Arbeitskolben 12 durch ein Federelement 30 gegen die Betätigungsrichtung A vorgespannt und in einer am Umfang des Arbeitskolbens 12 eingebrachten Nut 31 ist ein Dichtelement 32 in Form einer Manschette zur Abdichtung vorgesehen.

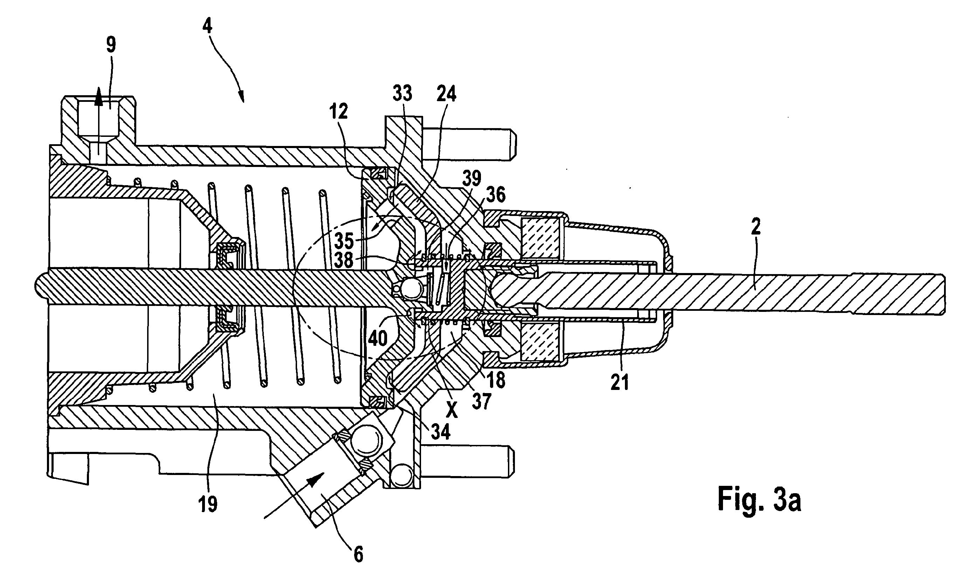

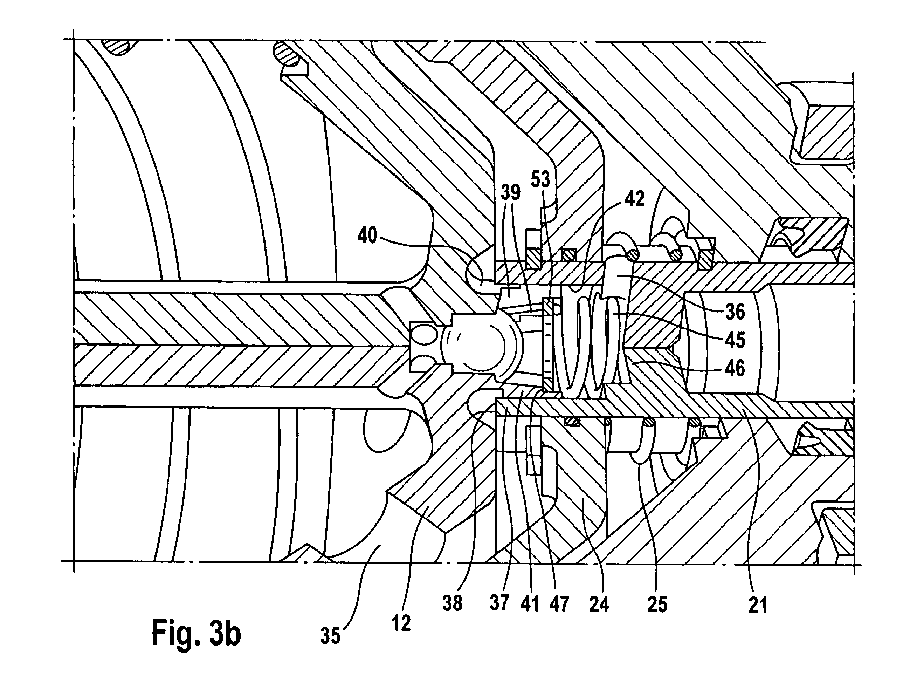

Weitere Merkmale des Verstärkers 4 sind den Fig. 3 bis 5 entnehmbar, welche diesen in einer vergrößerten Ansicht zeigen, und werden anhand der Funktionsweise des Verstärkers 4 beschrieben.

Fig. 3a zeigt den hydraulischen Verstärker 4 in einem unbetätigten Zustand. In diesem wird ein Volumenstrom der Lenkungspumpe 7 ungedrosselt durch den Verstärker 4 gefördert.

Die Hydraulikflüssigkeit kann über den Eingang 6 in die Verstärkungskammer 18 einströmen. In diesem Zustand liegt der Betätigungskolben 24 mit seiner umlaufenden Außenfläche 33 nicht an einer am Arbeitskolben 12 ausgebildeten Dichtkante 34 an, so dass die Hydraulikflüssigkeit zwischen dem Betätigungskolben 24 und dem Arbeitskolben 12 über Bohrungen 35 im Arbeitskolben 12 in die Rücklaufkammer 19 strömen kann.

Zudem kann die Hydraulikflüssigkeit durch eine oder mehrere Bohrungen 36 in einem topfförmigen Ende 37 des Steuerkolbens 21 strömen. Von einem Innenraum des topfförmigen Endes 37 strömt die Flüssigkeit durch im Arbeitskolben 12 ausgebildete Durchlässen 39 zwischen einer Stirnseite 38 des Steuerkolbens 21 und eine im Arbeitskolben 12 angeordnete Ringnut 40 hindurch, um durch die Bohrungen 35 in die Rücklaufkammer 19 zu gelangen.

Aus der Rücklaufkammer 19 strömt die Hydraulikflüssigkeit über den Abgang 9 in Richtung Vorratsbehälter 8.

Fig. 3b zeigt den vergrößerten Ausschnitt X in einer räumlichen Darstellung. Es ist ersichtlich, dass der Arbeitskolben 12 zur Führung in dem Steuerkolben 21 einen zylindrischen Führungsabschnitt 41 aufweist, welcher auf einer Innenseite 42 des topfförmigen Endes 37 des Steuerkolbens 24 geführt ist, wobei die bereits oben beschriebenen Durchlässe 39 in dem Führungsabschnitt 41 als Schlitze ausgebildet sind.

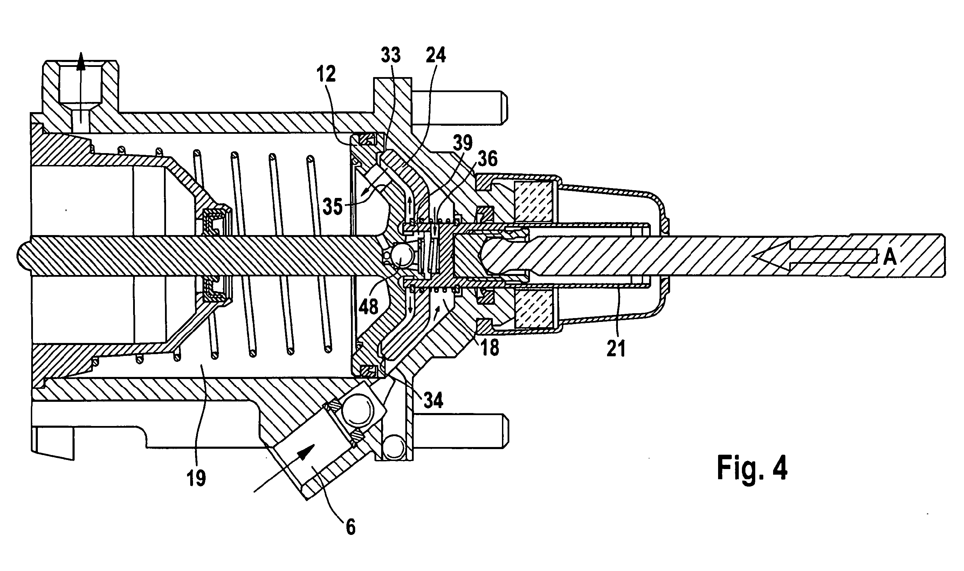

Fig. 4 zeigt den Verstärker 4 bei Betätigungsbeginn. Durch Betätigung des Bremspedals in Betätigungsrichtung A wird eine Kraft auf den Steuerkolben 21 ausgeübt. Dies bewirkt, dass der Betätigungskolben 24 mit der umlaufenden Außenfläche 33 an die umlaufende Dichtkante 34 des Arbeitskolbens 12 angelegt wird. Dadurch wird der Volumenstrom der Lenkungspumpe 7 daran gehindert, zwischen Betätigungskolben 24 und Arbeitskolben 12 hindurchzuströmen. Dieser kann nur noch gedrosselt durch die Bohrungen 36 im Steuerkolben 24 und die Durchlässe 39 des Arbeitskolbens 12 hindurchströmen. Durch diese erste Stufe einer Drosselung des Volumenstroms entsteht ein Staudruck im Verstärkungsraum 18.

Diese Position des Verstärkers 4 ist vergleichbar mit dem "Springer" bei pneumatischen Vakuumunterdruckverstärkern. Der Staudruck wirkt auf die Fläche des Betätigungskolbens 24, der Betätigungskolben 24 übt eine Kraft in Betätigungsrichtung A auf den Arbeitskolben 12 aus und beide Kolben 12, 24 fangen an, sich in Betätigungsrichtung A zu bewegen. Gleichzeitig wirkt der Staudruck auf die Fläche des Steuerkolbens 21, wodurch sich eine Gegenkraft in Richtung Bremspedal aufbaut, was dem Fahrer ein so genanntes Feedback vermittelt.

Die separate Ausgestaltung von Arbeitskolben 12 und Steuerkolben 21 erlaubt eine Einstellung des Springers durch variabel zu gestaltenden Durchmesser der beiden Bauteile. Ferner kann das Feedback abhängig vom Kolbendurchmesser des Betätigungskolbens 24 auf unterschiedlichste Kundenanforderungen eingestellt werden.

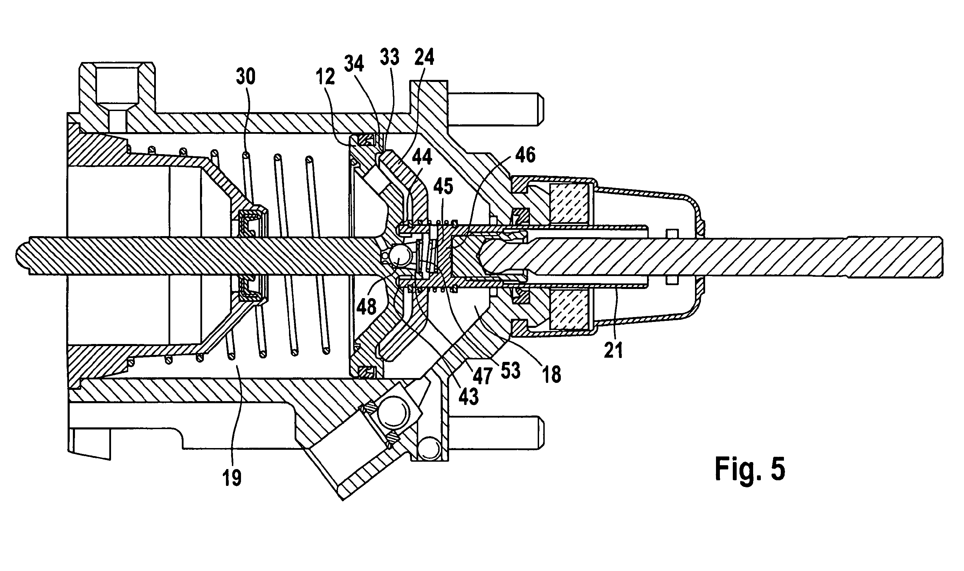

Durch weitere Betätigung des Bremspedals, welche in Fig. 5 dargestellt ist, verringert der Steuerkolben 21 die durchströmte Fläche der schlitzförmigen Durchlässe 39 im Arbeitskolben 12 bis zur kompletten Anlage einer Dichtkante 43 der Stirnseite 38 des Steuerkolbens 21 an einer Dichtfläche 44, welche in der Ringnut 40 des Arbeitskolbens 12 vorgesehen ist. Dadurch wird der Staudruck in der Verstärkungskammer 18 weiter auf maximalen Pumpendruck der Lenkungspumpe 7 erhöht.
Am Betätigungskolben 24 und am Arbeitskolben 12 steht jetzt Maximaldruck an, der die maximale Ausgangskraft des Verstärkers 4 zur Folge hat. Die Schließung des Volumenstromes zwischen Steuerkolben 21 und Arbeitskolben 12 stellt die zweite Stufe der Drosselung dar. Der Druckaufbau in der Verstärkungskammer 18 erfolgt also über eine zweistufige Drosselung des Volumenstromes zwischen der Verstärkungskammer 18 und der Rücklaufkammer 19.

Beim Lösen des Bremspedals löst sich die Dichtkante 43 des Steuerkolbens 21 von der Dichtfläche 44 des Arbeitskolbens 12 durch die Federkraft eines weiteren Federelementes 45, welches zwischen dem Arbeitskolben 12 und dem Steuerkolben 21 vorgespannt angeordnet ist. Das Federelement 45 stützt sich, wie insbesondere auch Fig. 3b zu entnehmen ist, an einem Boden 46 des topfförmigen Endes 37 des Steuerkolbens 21 sowie über ein Halteelement 53 an einem nach radial innen ragenden Vorsprung 47 des zylindrischen Führungsabschnittes 41 ab.

Der Betätigungskolben 24, d.h. seine Außenfläche 33, löst sich ebenfalls vom Arbeitskolben 12 bzw. dessen Dichkante 34, wodurch der Volumenstrom der Lenkungspumpe 7 wieder ungehindert durch den Verstärker 4 gefördert werden kann. Das Federelement 30 in der Rücklaufkammer 19 stellt die gesamte Kolbeneinheit 12, 24, 21 wieder in den Ausgangszustand zurück.

Bei einem Ausfall der Lenkungspumpe 7 erfolgt die Bremsung rein mechanisch und ausschließlich über die am Bremspedal aufgebrachte Fußkraft. Um den Druckausgleich zwischen der Rücklaufkammer 19 und der Verstärkungskammer 18 bei einer Relativbewegung des Arbeitskolbens 12 ohne hydraulische Unterstützung zu ermöglichen, öffnet ein als Kugelventil ausgestaltetes Rückschlagventil 48, welches im Arbeitskolben 12 angeordnet ist. Somit ist eine mechanische Rückfallebene des Verstärkers 4 gewährleistet.

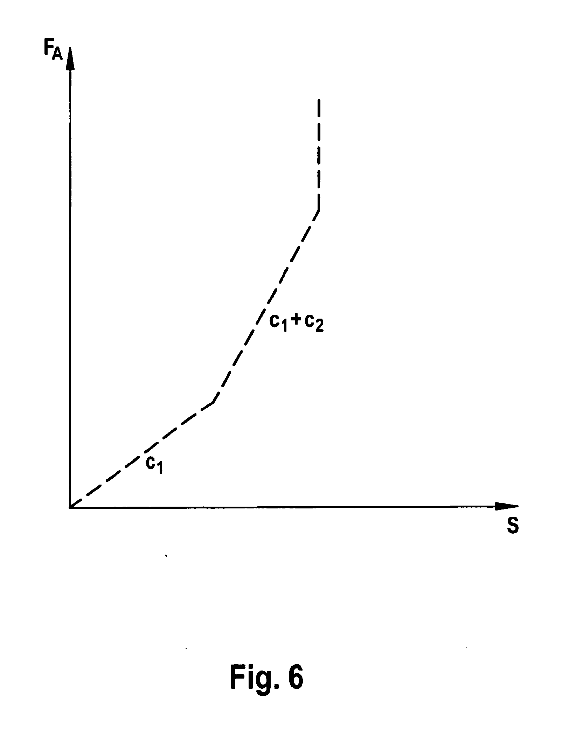

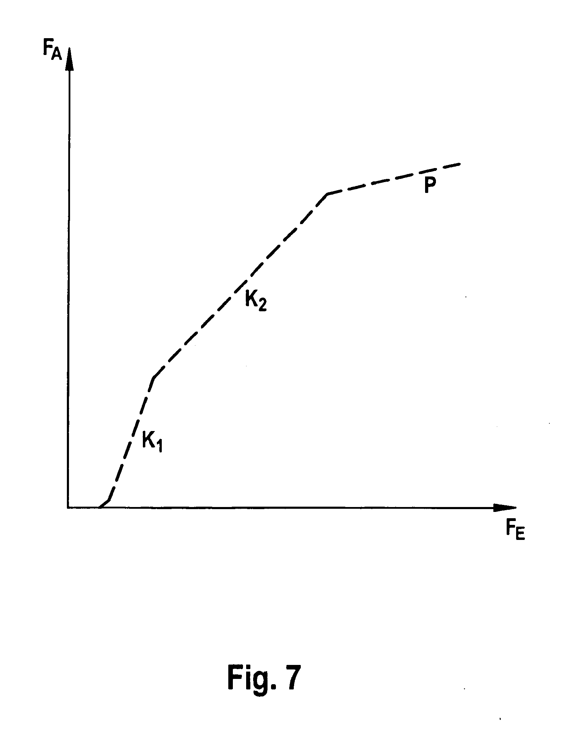

Den Fig. 6 und 7 sind jeweils ein Kraft-Weg-Diagramm bzw. ein Kraft-Kraft-Diagramm des beschriebenen hydraulischen Verstärkers 4 zu entnehmen, welche die beschriebenen Zustände des hydraulischen Verstärkers 4 zeigen.

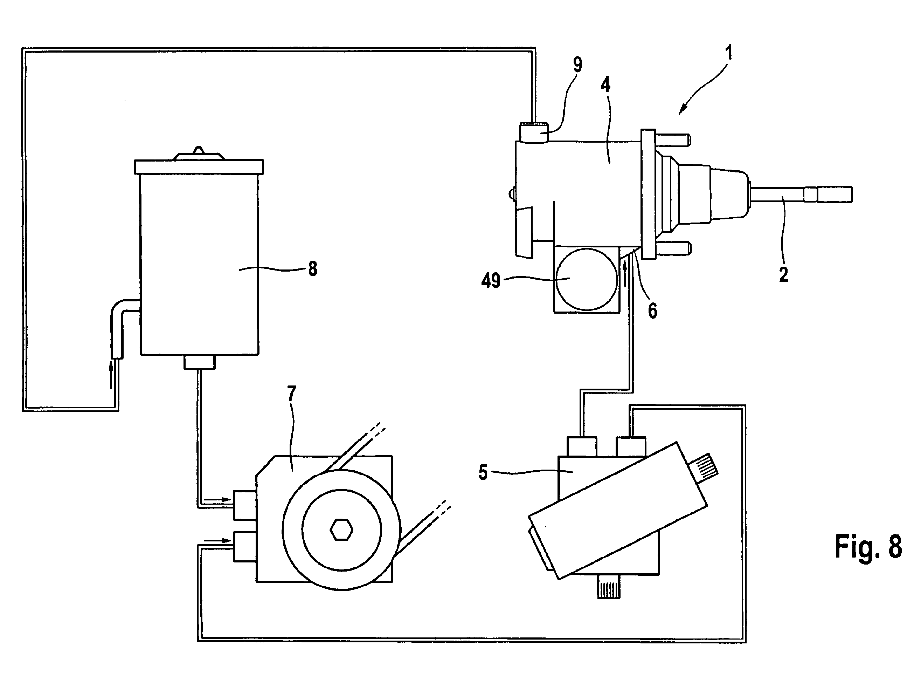

Ein zweites Ausführungsbeispiel einer erfindungsgemäßen Kraftfahrzeugbremsanlage ist gemäß Fig. 8 dargestellt, welche einen hydraulischen Schaltplan der hydraulischen Fahrzeugbremsanlage zeigt. Dabei unterscheidet sich dieses zum ersten Ausführungsbeispiel lediglich durch eine zusätzliche elektrische Rückfallebene des hydraulischen Verstärkers 4, welche für schwere Fahrzeuge, bei denen die Fußkraft als Rückfallebene nicht ausreicht, vorteilhaft ist.

Generell funktioniert der hydraulische Verstärker 4 des zweiten Ausführungsbeispiels wie beschrieben. Zusätzlich ist zur Umsetzung der elektrischen Rückfallebene eine elektrisch angetriebene Pumpe 49 an dem Verstärker 4 vorgesehen, welche bei Ausfall der Lenkungspumpe 7 Volumen von der Rücklaufkammer 19 in die Verstärkungskammer 18 fördert.

Im Eingang 6 des Verstärkers 4 ist ein nicht gezeigtes Rückschlagventil vorgesehen und im Abgang 9 ist ein Flusskontrollschalter 51 angeordnet.

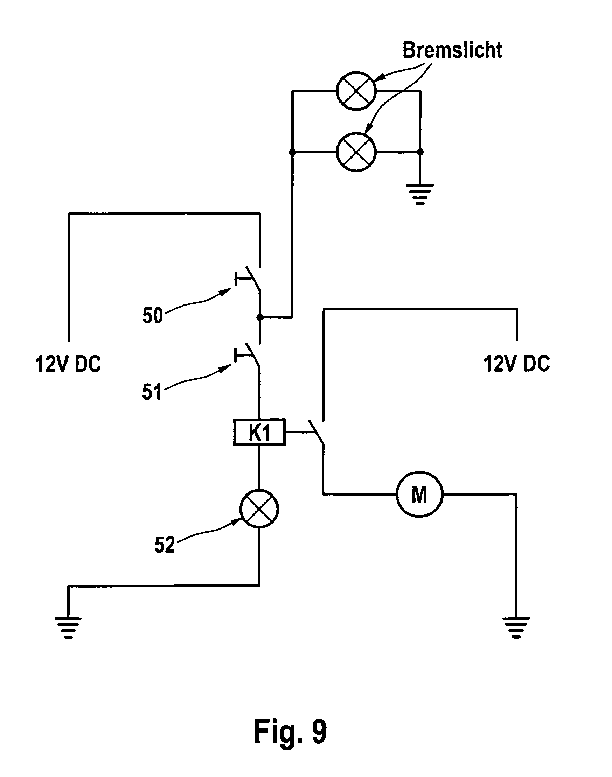

Fig. 9 zeigt den elektrischen Schaltplan des zweiten Ausführungsbeispiels.

Bei einem Ausfall der Lenkungspumpe 7 erfolgt die Bremsung nicht wie beim ersten Ausführungsbeispiel beschrieben ausschließlich über die am Bremspedal aufgebrachte Fußkraft.

Der im Abgang 9 installierte Flusskontrollschalter 51 registriert den abreißenden Volumenstrom und schließt sich. Ein Bremslichtschalter 50 und ein Relais sind mit ihm in Reihe geschaltet. Bei der Betätigung des Bremspedals schließt sich der Bremslichtschalter 50, was zur Folge hat, dass das Relais geschlossen wird und die Pumpe 49 anläuft. Die Pumpe 49 fördert Hydraulikflüssigkeit von der Rücklaufkammer 19 in die Verstärkungskammer 18 des Verstärkers 4. Dort wird ein Überdruck aufgebaut und das Rückschlagventil im Eingang 6 schließt sich.

Somit wird annähernd ein Überdruck wie mit der Lenkungspumpe 7 erreicht und die Bremsung kann erfolgen. Eine Warnlampe 52 informiert den Fahrer, dass die Lenkungspumpe 7 ausgefallen ist.

### Bezugszeichenliste

- 1: Bremsdruckgeber
- 2: Kolbenstange
- 3: Hauptbremszylinder
- 4: Verstärker
- 5: Lenkgetriebe
- 6: Eingang
- 7: Lenkungspumpe
- 8: Vorratsbehälter
- 9: Abgang
- 10: Gehäuse
- 11: Längsbohrung
- 12: Arbeitskolben
- 13: Betätigungselement
- 14: Hauptbremszylinderkolben
- 15: Glocke
- 16: Medientrennelement
- 17: Rand
- 18: Verstärkungskammer
- 19: Rücklaufkammer
- 20: Stirnseite
- 21: Steuerkolben
- 22: Öffnung
- 23: Dichtmanschette
- 24: Betätigungskolben
- 25: Federelement
- 26: Sicherungsring
- 27: Sicherungsring
- 28: Schutzkappe
- 29: Filzring
- 30: Federelement
- 31: Nut
- 32: Dichtelement
- 33: Außenfläche
- 34: Dichtkante
- 35: Bohrung
- 36: Bohrung
- 37: Ende
- 38: Stirnseite
- 39: Durchlass
- 40: Ringnut
- 41: Führungsabschnitt
- 42: Innenseite
- 43: Dichtkante
- 44: Dichtfläche
- 45: Federelement
- 46: Boden
- 47: Vorsprung
- 48: Rückschlagventil
- 49: Pumpe
- 50: Bremslichtschalter
- 51: Flusskontrollschalter
- 52: Warnlampe
- 53: Halteelement

## Patentansprüche

1. Hydraulische Fahrzeugbremsanlage, die einen von einer Bremsbetätigungseinrichtung betätigbaren Bremsdruckgeber (1) aufweist, wobei der Bremsdruckgeber (1) über wenigstens eine hydraulische Leitung mit Radbremsen des Fahrzeugs verbindbar ist und im Wesentlichen aus einem Hauptbremszylinder (3) und einem vorgeschalteten hydraulischen Verstärker (4) besteht, der eine Rücklaufkammer (19) und eine Verstärkungskammer (18), einen darin angeordneten Arbeitskolben (12) sowie einen Steuerkolben (21) aufweist, wobei der Arbeitskolben (12) in Kraftabgaberichtung über ein Betätigungselement (13) mit einem Hauptbremszylinderkolben wirkverbunden ist und der Verstärker (4) zwecks Bremskraftverstärkung über einen Eingang (6) mit einem hydraulischen Druck einer hydraulischen Druckquelle (7) beaufschlagbar ist, wobei ein Abgang (9) des Verstärkers (4) mit einem Vorratsbehälter (8) verbindbar ist, **dadurch gekennzeichnet, dass** der Steuerkolben (21) einen daran angeordneten, tellerförmigen Betätigungskolben (24) aufweist, welcher mit dem Arbeitskolben (12) zusammenwirkt, und der Steuerkolben (21) im Arbeitskolben (12) derart geführt vorgesehen ist, dass bei einer Betätigung des Verstärkers (4) eine zweistufige Drosselung des Volumenstromes zwischen der Verstärkungskammer (18) und der Rücklaufkammer (19) zum Druckaufbau in der Verstärkungskammer (18) ermöglicht ist.

2. Hydraulische Fahrzeugbremsanlage nach Anspruch 1, **dadurch gekennzeichnet, dass** der Betätigungskolben (24) mittels eines Federelementes (25) in Kraftabgaberichtung an einem Anschlag vorgespannt vorgesehen ist, wobei das Federelement (25) an einem weiteren Anschlag anliegt.

3. Hydraulische Fahrzeugbremsanlage nach Anspruch 2, **dadurch gekennzeichnet, dass** die Anschläge als Sicherungsringe (26, 27) vorgesehen sind, welche auf dem Steuerkolben (21) befestigt sind.

4. Hydraulische Fahrzeugbremsanlage nach einem der Ansprüche 1 bis 3, **dadurch gekennzeichnet, dass** der Arbeitskolben (12) zur Führung in dem Steuerkolben (21) einen zylindrischen Führungsabschnitt (41) aufweist, welcher an einer Innenseite (42) eines topfförmigen Endes (37) des Steuerkolbens (21) geführt ist, wobei der Führungsabschnitt (41) einen oder mehrere Durchbrüche (39) aufweist, die eine erste Drosselung des Volumenstroms ermöglichen, und an einer Stirnseite (38) des Steuerkolbens (21) eine Dichtkante (43) vorgesehen ist, welche an eine Dichtfläche (44) des Arbeitskolbens (12) anlegbar ist.

5. Hydraulische Fahrzeugbremsanlage nach Anspruch 4, **dadurch gekennzeichnet, dass** die Dichtfläche (44) in einer umlaufenden Ringnut (40) des Arbeitskolbens (12) ausgebildet ist.

6. Hydraulische Fahrzeugbremsanlage nach Anspruch 4 oder 5, **dadurch gekennzeichnet, dass** die Durchbrüche (39) als Schlitze vorgesehen sind.

7. Hydraulische Fahrzeugbremsanlage nach einem der Ansprüche 1 bis 6, **dadurch gekennzeichnet, dass** der Arbeitskolben (12) tellerförmig ausgebildet ist und eine Dichtkante (34) aufweist, an welche der Betätigungskolben (24) mit einer umlaufenden Außenfläche (33) anlegbar ist.

8. Hydraulische Fahrzeugbremsanlage nach Anspruch 7, **dadurch gekennzeichnet, dass** eine Stirnseite (20) des Verstärkers (4) kegelförmig ausgebildet ist.

9. Hydraulische Fahrzeugbremsanlage nach einem der Ansprüche 1 bis 8, **dadurch gekennzeichnet, dass** der Arbeitskolben (12) und das Betätigungselement (13) einteilig vorgesehen sind.

10. Hydraulische Fahrzeugbremsanlage nach einem der vorangegangenen Ansprüche, **dadurch gekennzeichnet, dass** zwischen dem Arbeitskolben (12) und dem Steuerkolben (21) ein Rückschlagventil (48) vorgesehen ist, welches ein Druckausgleich zwischen der Rücklaufkammer (19) und der Verstärkungskammer (18) bei Ausfall der hydraulischen Druckquelle (7) ermöglicht.

11. Hydraulische Fahrzeugbremsanlage nach Anspruch 10, **dadurch gekennzeichnet, dass** der hydraulische Verstärker (4) zusätzlich zu einer mechanischen Rückfallebene eine elektrische Rückfallebene aufweist.

12. Hydraulische Fahrzeugbremsanlage nach Anspruch 11, **dadurch gekennzeichnet, dass** der Verstärker (4) im Eingang (6) ein Rückschlagventil und im Abgang (9) ein Flusskontrollschalter (51) aufweist und eine elektrisch angetriebene Pumpe (49) an dem Verstärker (4) angeordnet ist, wobei die Pumpe (49) bei Ausfall der Druckquelle (7) Volumen von der Rücklaufkammer (19) in die Verstärkungskammer (18) fördert.

13. Verfahren zum Betrieb einer hydraulischen
Fahrzeugbremsanlage nach einem der vorangegangenen Ansprüche, **dadurch gekennzeichnet, dass** der Druckaufbau in der Verstärkungskammer (18) über eine zweistufige Drosselung des Volumenstromes erfolgt.

14. Verfahren zum Betrieb einer hydraulischen Fahrzeugbremsanlage nach Anspruch 13, **dadurch gekennzeichnet, dass** bei Betätigungsbeginn des Verstärkers (4) eine erste Drosselung des Volumenstromes erfolgt, wodurch ein Staudruck in der Verstärkungskammer (18) entsteht und der Staudruck auf den Steuerkolben (21) wirkt, so dass eine Gegenkraft in Richtung eines Bremspedals aufgebaut wird.

15. Verfahren zum Betrieb einer hydraulischen Fahrzeugbremsanlage nach Anspruch 14, **dadurch gekennzeichnet, dass** bei weiterer Betätigung eine zweite Drosselung des Volumenstromes erfolgt, so dass der Staudruck in der Verstärkungskammer (18) auf den maximalen Druck der hydraulischen Druckquelle (7) erhöht wird.

16. Verfahren zum Betrieb einer hydraulischen Fahrzeugbremsanlage nach einem der Ansprüche 13 bis 15, **dadurch gekennzeichnet, dass** bei Ausfall der hydraulischen Druckquelle (7) eine mechanische Rückfallebene vorgesehen ist, wobei ein Rückschlagventil (48) zwischen dem Arbeitskolben (12) und dem Steuerkolben (21) ein Druckausgleich zwischen der Rücklaufkammer (19) und der Verstärkungskammer (18) erlaubt.

17. Verfahren zum Betrieb einer hydraulischen Fahrzeugbremsanlage nach Anspruch 16, **dadurch gekennzeichnet, dass** zusätzlich eine elektrische Rückfallebene vorgesehen ist, welche über einen Kontrollschalter im Abgang des Verstärkers sowie einen Bremslichtschalter aktiviert wird.

18. Verfahren zum Betrieb einer hydraulischen Fahrzeugbremsanlage nach Anspruch 17, **dadurch gekennzeichnet, dass** eine elektrisch angetriebene Pumpe (49) aktiviert wird, welche bei Ausfall der Druckquelle (7) Volumen von der Rücklaufkammer (19) in die Verstärkungskammer (18) fördert.

## Claims

1. Hydraulic vehicle brake system, which has a brake pressure signal generator (1) which can be activated by a brake activation device, wherein the brake pressure signal generator (1) can be connected to wheel brakes of the vehicle via at least one hydraulic line and is composed essentially of a master brake cylinder (3) and a hydraulic booster (4) which is connected upstream and which has a return flow chamber (19) and a boosting chamber (18), a working piston (12) arranged therein and a control piston (21), wherein the working piston (12) is operatively connected in the force outputting direction to a master brake cylinder piston via an activation element (13), and a hydraulic pressure of a hydraulic pressure source (7) can be applied to the booster (4) via an inlet (6) for the purpose of boosting braking force, wherein an outlet (9) of the booster (4) can be connected to a reservoir vessel (8), **characterized in that** the control piston (21) has a plate-shaped actuation piston (24) which is arranged thereon and which interacts with the working piston (12), and the control piston (21) is provided guided in the working piston (12) in such a way that, when the booster (4) is activated, two-stage throttling of the volume flow between the boosting chamber (18) and the return flow chamber (19) is made possible in order to build up pressure in the boosting chamber (18).

2. Hydraulic vehicle brake system according to Claim 1, **characterized in that** the actuation piston (24) is provided prestressed against a stop by means of a spring element (25) in the force outputting direction, wherein the spring element (25) bears against a further stop.

3. Hydraulic vehicle brake system according to Claim 2, **characterized in that** the stops are provided as locking rings (26, 27) which are attached to the control piston (21).

4. Hydraulic vehicle brake system according to one of Claims 1 to 3, **characterized in that** the working piston (12) has, for the purpose of guidance in the control piston (21), a cylindrical guide section (41) which is guided on an inner side (42) of a pot-shaped end (37) of the control piston (21), wherein the guide section (41) has one or more breakthroughs (39) which permit first throttling of the volume flow, and on an end side (38) of the control piston (21) a sealing edge (43) is provided which can be brought to bear against a sealing face (44) of the working piston (12).

5. Hydraulic vehicle brake system according to Claim 4, **characterized in that** the sealing face (44) is formed in a circumferential annular groove (40) of the working piston (12).

6. Hydraulic vehicle brake system according to Claim 4 or 5, **characterized in that** the breakthroughs (39) are provided as slits.

7. Hydraulic vehicle brake system according to one of Claims 1 to 6, **characterized in that** the working piston (12) is embodied in a plate shape and has a sealing edge (34) against which the actuation piston (24) can be brought to bear with a circumferential outer face (33).

8. Hydraulic vehicle brake system according to Claim 7, **characterized in that** an end side (20) of the booster (4) is embodied in a cone shape.

9. Hydraulic vehicle brake system according to one of Claims 1 to 8, **characterized in that** the working piston (12) and the activation element (13) are provided in one piece.

10. Hydraulic vehicle brake system according to one of the preceding claims, **characterized in that** a nonreturn valve (48), which permits pressure equalization between the return flow chamber (19) and the boosting chamber (18) in the event of failure of the hydraulic pressure source (7), is provided between the working piston (12) and the control piston (21).

11. Hydraulic vehicle brake system according to Claim 10, **characterized in that** the hydraulic booster (4) has an electrical fallback level in addition to a mechanical fallback level.

12. Hydraulic vehicle brake system according to Claim 11, **characterized in that** the booster (4) has a nonreturn valve in the inlet (6) and a flow control switch (51) in the outlet (9), and an electrically driven pump (49) is arranged on the booster (4), wherein in the event of failure of the pressure source (7) the pump (49) feeds the volume into the boosting chamber (18) from the return flow chamber (19).

13. Method for operating a hydraulic vehicle brake system according to one of the preceding claims, **characterized in that** the build-up in pressure in the boosting chamber (18) is carried out by means of two-stage throttling of the volume flow.

14. Method for operating a hydraulic vehicle brake system according to Claim 13, **characterized in that** at the start of activation of the booster (4) first throttling of the volume flow takes place, through which a backpressure is produced in the boosting chamber (18), and the backpressure acts on the control piston (21) with the result that an opposing force is built up in the direction of a brake pedal.

15. Method for operating a hydraulic vehicle brake system according to Claim 14, **characterized in that** in the case of further activation second throttling of the volume flow takes place, with the result that the backpressure in the boosting chamber (18) is increased to the maximum pressure of the hydraulic pressure source (7).

16. Method for operating a hydraulic vehicle brake system according to one of Claims 13 to 15, **characterized in that** in the event of failure of the hydraulic pressure source (7) a mechanical fallback level is provided, wherein a nonreturn valve (48) between the working piston (12) and the control piston (21) permits pressure equalization between the return flow chamber (19) and the boosting chamber (18).

17. Method for operating a hydraulic vehicle brake system according to Claim 16, **characterized in that** in addition an electrical fallback level is provided which is activated by means of a control switch in the outlet of the booster, and by means of a brake light switch.

18. Method for operating a hydraulic vehicle brake system according to Claim 17, **characterized in that** an electrically driven pump (49) is activated which in the event of failure of the pressure source (7) feeds volume into the boosting chamber (18) from the return flow chamber (19).

## Revendications

1. Système de freinage hydraulique de véhicule, qui présente un émetteur de pression de freinage (1) actionnable par un dispositif d'actionnement du frein, dans lequel l'émetteur de pression de freinage (1) peut être relié aux freins de roue du véhicule par au moins une conduite hydraulique et se compose essentiellement d'un maître-cylindre de frein (3) et d'un amplificateur hydraulique placé en amont (4), qui comprend une chambre de reflux (19) et une chambre d'amplification (18), un piston de travail (12) disposé dans celle-ci ainsi qu'un piston de commande (21), dans lequel le piston de travail (12) est en liaison active avec un piston du maître-cylindre de frein au moyen d'un élément d'actionnement (13) dans la direction de transmission de force et l'amplificateur (4) peut être soumis à une pression hydraulique d'une source de pression hydraulique (7) via une entrée (6) en vue de l'amplification de la force de freinage, dans lequel une sortie (9) de l'amplificateur (4) peut être reliée à un réservoir (8), **caractérisé en ce que** le piston de commande (21) présente un piston d'actionnement en forme de plateau (24) disposé sur celui-ci, qui coopère avec le piston de travail (12), et le piston de commande (21) est prévu en mode de guidage dans le piston de travail (12) de telle manière que, lors d'un actionnement de l'amplificateur (4), un étranglement en deux étapes de l'écoulement volumique soit possible entre la chambre d'amplification (18) et la chambre de reflux (19) afin de générer la pression dans la chambre d'amplification (18).

2. Système de freinage hydraulique de véhicule selon la revendication 1, **caractérisé en ce que** le piston d'actionnement (24) est prévu en mode précontraint sur une butée au moyen d'un élément de ressort (25) dans la direction de transmission de force, dans lequel l'élément de ressort (25) s'applique sur une autre butée.

3. Système de freinage hydraulique de véhicule selon la revendication 2, **caractérisé en ce que** les butées sont prévues sous la forme de circlips (26, 27), qui sont fixés sur le piston de commande (21).

4. Système de freinage hydraulique de véhicule selon l'une quelconque des revendications 1 à 3, **caractérisé en ce que** le piston de travail (12) présente pour le guidage dans le piston de commande (21) une section de guidage cylindrique (41), qui est menée sur une face intérieure (42) d'une extrémité en forme de godet (37) du piston de commande (21), dans lequel la section de guidage (41) présente un ou plusieurs passages (39), qui permettent un premier étranglement de l'écoulement volumique, et il est prévu sur une face frontale (38) du piston de commande (21) une arête d'étanchéité (43), qui peut être appliquée sur une face d'étanchéité (44) du piston de travail (12).

5. Système de freinage hydraulique de véhicule selon la revendication 4, **caractérisé en ce que** la face d'étanchéité (44) est réalisée dans une gorge périphérique (40) du piston de travail (12).

6. Système de freinage hydraulique de véhicule selon la revendication 4 ou 5, **caractérisé en ce que** les passages (39) sont prévus sous la forme de fentes.

7. Système de freinage hydraulique de véhicule selon l'une quelconque des revendications 1 à 6, **caractérisé en ce que** le piston de travail (12) est réalisé en forme de plateau et présente une arête d'étanchéité (34), sur laquelle le piston d'actionnement (24) peut s'appliquer avec une face extérieure périphérique (33).

8. Système de freinage hydraulique de véhicule selon la revendication 7, **caractérisé en ce qu'**une face frontale (20) de l'amplificateur (4) est réalisée en forme de cône.

9. Système de freinage hydraulique de véhicule selon l'une quelconque des revendications 1 à 8, **caractérisé en ce que** le piston de travail (12) et l'élément d'actionnement (13) sont prévus en une seule pièce.

10. Système de freinage hydraulique de véhicule selon l'une quelconque des revendications précédentes, **caractérisé en ce qu'**il est prévu, entre le piston de travail (12) et le piston de commande (21), une soupape de non-retour (48), qui permet un équilibrage de pression entre la chambre de reflux (19) et la chambre d'amplification (18) en cas de disparition de la source de pression hydraulique (7).

11. Système de freinage hydraulique de véhicule selon la revendication 10, **caractérisé en ce que** l'amplificateur hydraulique (4) présente un plan de recul électrique en plus d'un plan de recul mécanique.

12. Système de freinage hydraulique de véhicule selon la revendication 11, **caractérisé en ce que** l'amplificateur (4) présente dans l'entrée (6) une soupape de non-retour et dans la sortie (9) un interrupteur de commande d'écoulement (51), et une pompe à entraînement électrique (49) est disposée sur l'amplificateur (4), dans lequel la pompe (49) envoie un volume de la chambre de reflux (19) dans la chambre d'amplification (18) en cas de disparition de la source de pression (7).

13. Procédé de commande d'un système de freinage hydraulique de véhicule selon l'une quelconque des revendications précédentes, **caractérisé en ce que** l'on effectue la génération de pression dans la chambre d'amplification (18) par un étranglement en deux étapes de l'écoulement volumique.

14. Procédé de commande d'un système de freinage hydraulique de véhicule selon la revendication 13, **caractérisé en ce que**, au début de l'actionnement de l'amplificateur (4), il se produit un premier étranglement de l'écoulement volumique, par lequel il apparaît une pression d'accumulation dans la chambre d'amplification (18) et la pression d'accumulation agit sur le piston de commande (21), de telle manière qu'une force antagoniste soit suscitée en direction d'une pédale de frein.

15. Procédé de commande d'un système de freinage hydraulique de véhicule selon la revendication 14, **caractérisé en ce que**, en cas de nouvel actionnement, il se produit un deuxième étranglement de l'écoulement volumique, de telle manière que la pression d'accumulation dans la chambre d'amplification (18) soit accrue à la pression maximale de la source de pression hydraulique (7).

16. Procédé de commande d'un système de freinage hydraulique de véhicule selon l'une quelconque des revendications 13 à 15, **caractérisé en ce que**, en cas de disparition de la source de pression hydraulique (7), il est prévu un plan de recul mécanique, et une soupape de non-retour (48) entre le piston de travail (12) et le piston de commande (21) permet un équilibrage de pression entre la chambre de reflux (19) et la chambre d'amplification (18).

17. Procédé de commande d'un système de freinage hydraulique de véhicule selon la revendication 16, **caractérisé en ce qu'**il est prévu en outre un plan de recul électrique, qui est activé par un interrupteur de commande dans la sortie de l'amplificateur ainsi que par un interrupteur des feux de freinage.

18. Procédé de commande d'un système de freinage hydraulique de véhicule selon la revendication 17, **caractérisé en ce que** l'on active une pompe à entraînement électrique (49), qui envoie un volume de la chambre de reflux (19) dans la chambre d'amplification (18) en cas de disparition de la source de pression (7).
